(19) Europäisches Patentamt
European Patent Office
Office européen des brevets

(11) Veröffentlichungsnummer: **0 253 276 B1**

(12) **EUROPÄISCHE PATENTSCHRIFT**

(45) Veröffentlichungstag der Patentschrift: **21.04.93**

(51) Int. Cl.$^5$: **C09B 67/22**, C09B 67/14, C09D 5/44, //C09B48/00, C09B15/00

(21) Anmeldenummer: **87109767.1**

(22) Anmeldetag: **07.07.87**

(54) **Pigmente der Chinacridonchinon-Reihe, Verfahren zu ihrer Herstellung und ihre Verwendung.**

(30) Priorität: **11.07.86 DE 3623336**

(43) Veröffentlichungstag der Anmeldung:
**20.01.88 Patentblatt 88/03**

(45) Bekanntmachung des Hinweises auf die Patenterteilung:
**21.04.93 Patentblatt 93/16**

(84) Benannte Vertragsstaaten:
**CH DE FR GB IT LI**

(56) Entgegenhaltungen:
**EP-A- 0 012 432**
**CH-A- 481 999**
**US-A- 3 686 009**

(73) Patentinhaber: **HOECHST AKTIENGESELLSCHAFT**
**Postfach 80 03 20**
**W-6230 Frankfurt am Main 80(DE)**

(72) Erfinder: **Dietz, Erwin, Dr.**
**St.-Matthäus-Strasse 7**
**W-6233 Kelkheim (Taunus)(DE)**
Erfinder: **Prokschy, Frank, Dr.**
**Grimoldweg 15**
**W-6230 Frankfurt am Main 80(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Gegenstand der Erfindung sind neue gold- und maroonfarbene Pigmente der Chinacridonchinon-Reihe, die sehr gute Licht- und Wetterechtheitseigenschaften besitzen, Verfahren zu ihrer Herstellung und ihre Verwendung zum Anfärben synthetischer und natürlicher Materialien, insbesondere zur Herstellung hochwertiger Lacke für Automobil-Metallic-lackierungen.

Die den wesentlichen Bestandteil dieser Pigmente bildenden Chinacridonchinone der nachstehenden Formel CC sind schon relativ lange bekannt (Sharvin, J. Russ. Phys. Chem. Ges. 47, 1260 (1915); Lesnianski, Ber. 51, 695 (1918)). Obwohl sie einen interessanten gelben Farbton besitzen und in den meisten Lösemitteln unlöslich sind, fanden sie wegen ihrer mangelhaften Licht- und Wetterechtheit keine Verwendung als Pigmente.

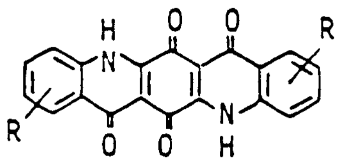

CC

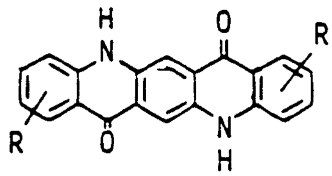

C

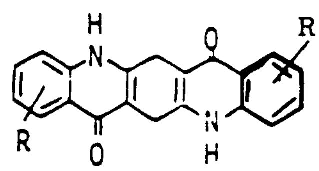

DC

Die Behebung dieses Mangels bei Chinacridonchinonen (Formel CC) gelang durch Mischkristallbildung mit Chinacridonen (Formel C) und Dihydrochinacridonen (Formel DC) (US-PS 3686009, US-PS 3748162).

Die Behebung dieses Mangels gelang auch durch Zusatz einfacherer Verbindungen, wie beispielsweise Derivaten des N,N'-Diphenyl-p-phenylendiamins (Formel P, US-PS 3341345) oder des 2-Anilinoacridons (Formel A, US-PS 4286998) unter Mischkristallbildung.

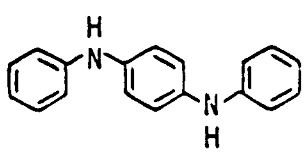

P

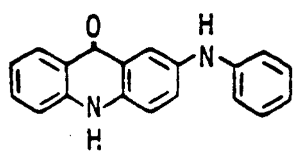

A

Unter einem Mischkristall oder einer festen Lösung versteht man dabei, daß eine oder mehrere zugesetzte Verbindungen im Kristallgitter einer "Wirtsverbindung" vorliegen. Das Röntgenbeugungsdiagramm eines Mischkristalls zeigt dann nur (das in vielen Fällen aufgeweitete) Kristallgitter dieser "Wirtsverbindung", während im Diagramm der entsprechenden mechanischen Mischung alle Komponenten nachweisbar sind.

Verbindungen, die sich vom 2-Anilinoacridon (Formel A) ableiten, sind von ihrer Struktur her gut für den Einbau in das Kristallgitter von Chinacridonchinonen (Formel CC) geeignet. Bei der Kombination Chinacridonchinon und 2-Anilinoacridon wird eine ausreichende Verbesserung der Licht- und Wetterechtheit des resultierenden Mischkristallpigments aber erst bei relativ großen Mengen diese Zusatzes (10 - 15 Gew.-%) erzielt bzw. muß zusätzlich noch basisches Nickelcarbonat auf die Pigmentoberfläche aufgebracht werden (US-PS 4286998). Der Zusatz relativ großer Mengen an 2-Anilinoacridon verringert die Farbstärke im Vergleich zu den Chinacridonchinonen beträchtlich, da es sich bei den Derivaten des 2-Anilinoacridons (Formel A) um farblose bis schwach gelb gefärbte Verbindungen handelt. Der Umgang mit nickelhaltigen Stoffen (wie beispielsweise Nickeloxiden und -carbonaten) ist aus toxikologischen Gründen nicht unbedenklich.

Mischkristalle aus Chinacridonchinonen und Chinacridon (Formel CC und C mit R = H) besitzen eine umso bessere Licht- und Wetterechtheit, je mehr Chinacridon in das Kristallgitter des Chinacridonchinons eingebaut wird. Allerdings läßt sich dieser Effekt nur bis zu einem molaren Verhältnis von Chinacridonchinon : Chinacridon ca. 1 : 1 beobachten. Erhöht man die Mengen an Chinacridon über dieses Verhältnis hinaus so wird dieses nicht mehr in das Kristallgitter des Chinacridonchinons eingebaut. Dieses überschüssige Chinacridon läßt sich im Röntgenbeugungsdiagramm neben den verschobenen Reflexen des

Chinacridonchinon-Gitters nachweisen. Diese Pigmente besitzen zwar eine wesentlich bessere Licht- und Wetterechtheit als die reinen Chinacridonchinone, doch ist diese für eine Anwendung in der Praxis noch nicht ausreichend.

Es wurde nun gefunden, daß man durch Einbau von Chinacridonen und einem 2-Anilino- oder 2-Phenoxy-acridon-derivat in das Kristallgitter von Chinacridonchinonen, je nachdem, welche Mengen an Chinacridonen vorliegen, gold- und maroonfarbene Pigmente mit sehr guter Licht- und Wetterechtheit erhält.

Die vorliegende Erfindung betrifft somit neue Pigmente der Chinacridonchinon-Reihe, bestehend aus 98 - 20 Molprozent eines Chinacridonchinons der allgemeinen Formel (1)

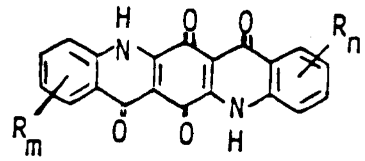
(1)

in welcher R ein Wasserstoff- oder Chloratom oder eine Methyl- oder Carbonamidgruppe bedeutet, und m, n = 1 oder 2 ist und 1 - 65 Molprozent eines Chinacridons der allgemeinen Formel (2)

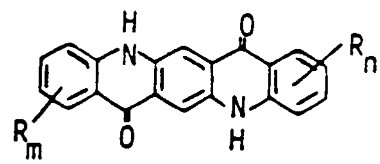
(2)

in welcher R, m und n die vorstehend genannte Bedeutung haben, und 1 - 15 Molprozent eines oder zweier Acridonderivate der allgemeinen Formeln (3) und/oder (4)

(3)
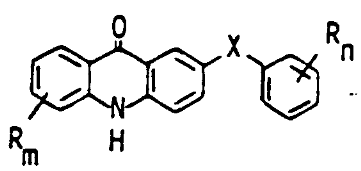
und/oder
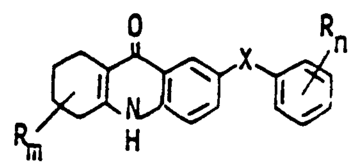
(4)

in welcher X = 0 oder NH bedeutet und R gleich oder verschieden sein kann und, wie m und n, die vorstehend genannte Bedeutung hat, wobei die zugesetzten Verbindungen der allgemeinen Formeln (2), (3) und/oder (4) überwiegend in das Kristallgitter des Chinacridonchinons der allgemeinen Formel (1) eingebaut sind.

Besonders wertvolle neue Pigmente der Chinacridonchinon-Reihe sind solche, die aus 98 - 70 Molprozent des Chinacridonchinons der Formel

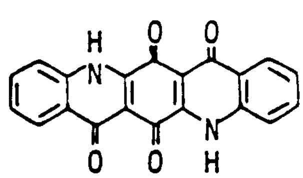

1 - 15 Molprozent des Chinacridons der Formel

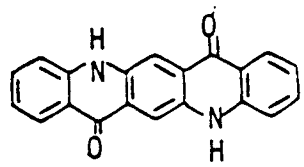

und 1- 15 Molprozent eines oder zweier Acridonderivate der Formeln

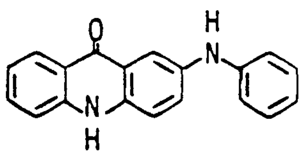

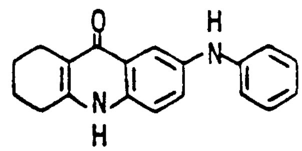

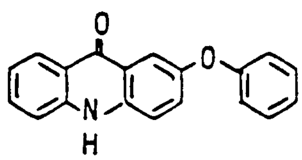

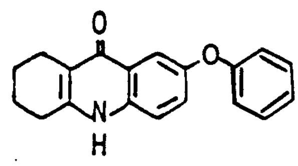

bestehen, wobei die zugesetzten Verbindungen im Kristallgitter des Chinacridonchinons vorliegen, und solche, die aus 54 - 20 Molprozent des Chinacridonchinons der Formel

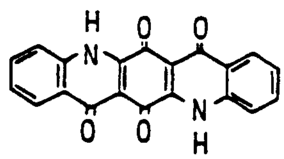

45 - 65 Molprozent des Chinacridons der Formel

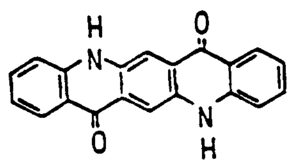

und 1 - 15 Molprozent eines oder zweier Acridonderivate der Formeln

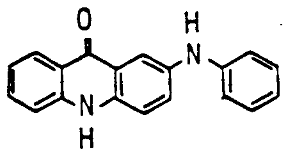

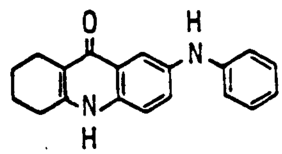

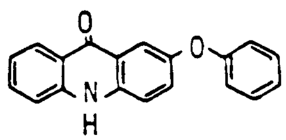

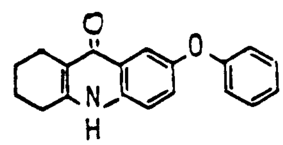

wobei die zugesetzten Verbindungen überwiegend im Kristallgitter des Chinacridonchinons vorliegen.

Weiterhin betrifft die Erfindung ein Verfahren zur Herstellung der genannten neuen Mischkristallpigmente, indem man die Verbindungen der genannten allgemeinen Formeln (1), (2), (3) und/oder (4) in der 5- bis 40-fachen Gewichtsmenge einer Säure, der gegenüber die genannten, zu lösenden Verbindungen bei den jeweils angewandten Temperaturen inert sind, löst und anschließend durch Eingießen der Lösung in die 5- bis 20-fache Gewichtsmenge Wasser von 0 - 50 °C, bezogen auf das Gewicht der eingesetzten Säure (100 %ig), hydrolysiert. Zum Lösen der genannten Verbindungen eignen sich besonders 96 - 100 %ige Schwefelsäure (Temperatur 0 - 30 °C) und Polyphosphorsäure (80 - 86 % $P_4O_{10}$) (Temperatur 120 - 160 °C).

Schließlich betrifft die Erfindung ein Verfahren zur Herstellung der genannten Mischkristallpigmente, indem man die Vorstufen der allgemeinen Formeln (1), (2) und (3), nämlich Verbindungen der allgemeinen Formeln (1a), (2a) und (3a)

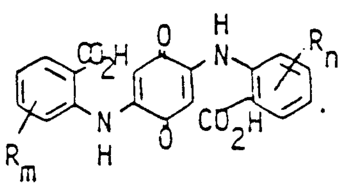

(1a)

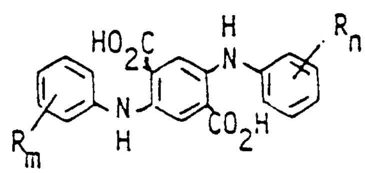

(2a)

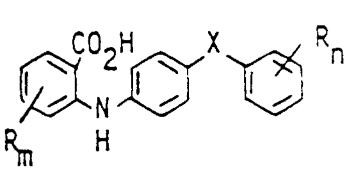

(3a)

in welchen R, m, n und X die vorstehend genannten Bedeutungen haben, gemeinsam in einem wasserentziehenden Medium, wie beispielsweise in der 8- bis 40-fachen Gewichtsmenge Polyphosphorsäure (80 - 86 % $P_4O_{10}$) von 100 - 180 °C cyclisiert und anschließend, wie weiter oben beschrieben, hydrolysiert.

Die erfindungsgemäßen Mischkristallpigmente eignen sich zum Anfärben synthetischer und natürlicher Materialien, besonders aber zur Herstellung von gold- und maroonfarbenen Automobil-Metallic-Lackierungen.

Die Synthese der Acridonderivate der allgemeinen Formel (3) kann durch Umsetzung entsprechend substituierter 2-Chlorbenzoesäuren mit entsprechend substituierten 4-Aminodiphenylamin- bzw. 4-Aminodiphenylether-Derivaten und anschließende Cyclisierung der Produkte in Schwefel- bzw. Polyphosphorsäure erfolgen (Kalb, Ber. d. dt. chem. Ges. 43, 2209 (1919)).

Weiterhin sind Acridonderivate der allgemeinen Formel (3) durch katalytische Dehydrierung der entsprechenden Tetrahydroverbindungen (allgemeine Formel (4)) erhältlich, die sich durch Umsetzung entsprechend substituierter Cyclohexanon-2-carbonsäureestern mit entsprechend substituierten 4-Aminodiphenylether-Derivaten und Cyclisierung der Produkte in einem hochsiedenden organischen Lösemittel erhalten lassen (US-PS 4286998). Eine weitere Herstellungsmöglichkeit der inredestehenden Acridonderivate wird in der DE-OS 2165647 beschrieben.

Die Bewitterungen wurden mit dem Gerät Xenotest® X 1200 W der Firma ORIGINAL HANAU HERAEUS GMBH in einem TSA-Lacksystem (1:1-$TiO_2$-Aufhellung) durchgeführt.

ΔE ist ein Maß für die Licht- und Wetterechtheit eines Pigments und gibt den Unterschied zwischen den Farborten der bewitterten und unbewitterten Probe an (DIN 6174). Je kleiner dieser Wert nach einer bestimmten Zeit ist, umso besser ist die Licht- und Wetterechtheit des betreffenden Pigments.
Brauchbare Pigmente besitzen bei Prüfung nach diesem Verfahren einen ΔE-Wert von kleiner als 3 nach 2000 Stunden Bewitterung; wird dieser Wert zu einem früheren Zeitpunkt überschritten, so wird der Bewitterungsvorgang abgebrochen. Der Vergleich der ΔE-Werte erfolgt in der Regel nach gleichlanger Bewitterungsdauer.

Die in den nachstehenden Beispielen angegebenen Mengen sind Gewichtsmengen.

Beispiel 1

A Teile Chinacridonchinon, B Teile Chinacridon und C Teile 2-Anilino-acridon werden bei maximal 30 °C in X Teilen 98 %iger Schwefelsäure gelöst; anschließend wird die erhaltene Lösung durch Eingießen in Y Teile Wasser von 0 °C hydrolysiert und die entstandene Suspension 2 Stunden auf 90 °C erwärmt. Man erhält nach Absaugen, Neutralwaschen und Trocknen Z Teile eines goldfarbenen Pigmentes (vgl. hierzu die nachstehende Tabelle).

| Beispiel | A | B | C | X | Y | Z | Molverhältnis A : B : C | ΔE 1000 h | ΔE 2000 h |
|---|---|---|---|---|---|---|---|---|---|
| 1a | 13,7 | 1,6 | 1,4 | 140 | 1400 | 16,1 | 8 : 1 : 1 | 0,9 | 1,0 |
| 1b | 27,4 | 3,2 | - | 240 | 2200 | 29,7 | 8 : 1 : - | 2,2 | 3,1 |
| 1c | 11,3 | - | 2,0 | 110 | 1200 | 12,9 | 4,7 : - : 1 | 3,0 | - |
| 1d | 11,3 | - | 2,0 | 110 | 1200 | 13,3 | 4,7 : - : 1 | 1,3 | 2,4 *) |

*) gemäß Beispiel 3 aus US-PS 4286998, wobei jedoch auf den Zusatz oberflächenaktiver Substanzen (außer dem Nickelsalz) verzichtet wurde.

Die nach den Vergleichsbeispielen 1b - 1d erhaltene Pigmente sind bezüglich ihrer Licht- und Wetterechtheit dem erfindungsgemäßen Patent (Beispiel 1a) deutlich unterlegen.

Beispiel 2

Die Durchführung erfolgt, wie in Beispiel 1 beschrieben, jedoch mit dem Unterschied, daß statt C Teilen 2-Anilinoacridon D Teile 1,2,3,4-Tetrahydro-8-anilinoacridon eingesetzt werden (vgl. hierzu die nachstehende Tabelle).

| Beispiel | A | B | D | X | Y | Z | Molverhältnis A : B : D | ΔE 1000 h | ΔE 1500 h |
|---|---|---|---|---|---|---|---|---|---|
| 2a | 13,7 | 1,56 | 1,44 | 160 | 1400 | 16,1 | 8 : 1 : 1 | 0,9 | 1,1 |
| 2b | 15,1 | - | 1,6 | 160 | 1400 | 16,0 | 8 : - : 1 | 3,9 | - |

Das Pigment aus Beispiel 2a ist dem aus Beispiel 2b in seiner Licht- und Wetterechtheit deutlich überlegen.

Beispiel 3

13,7 Teile Chinacridonchinon, 0,78 Teile Chinacridon, 0,62 Teile 2-Anilinoacridon und 0,09 Teile 1,2,3,4-Tetrahydro-8-anilino-acridon werden in 160 Teilen 98 %iger Schwefelsäure gelöst, durch Eingießen in 1000 Teile Wasser von 0 °C hydrolysiert und, wie in Beispiel 1 beschrieben, weiterbehandelt. Man erhält 14,6 Teile eines goldfarbenen Pigments, das nach 1000 Stunden Bewitterung in dem oben beschriebenen TSA-Lacksystem (1:1-$TiO_2$-Aufhellung) einen ΔE-Wert von 1,0 besitzt.

Beispiel 4

A Teile 2,9-Dimethylchinacridonchinon, B Teile 2,9-Dimethylchinacridon und C Teile 2-Anilinoacridon werden in 200 Teilen 98 %iger Schwefelsäure von 20 °C gelöst, durch Eingießen in 1200 Teile Wasser von 0 °C hydrolysiert und, wie in Beispiel 1 beschrieben, weiterbehandelt. Man erhält Z Teile eines goldfarbenen Pigments.

| Beispiel | A | B | C | Z | Molverhältnis A : B : C | ΔE 500 h |
|---|---|---|---|---|---|---|
| 4a | 12,95 | 1,49 | 1,25 | 15,1 | 8 : 1 : 1 | 1,6 |
| 4b | 14,8 | - | 1,27 | 15,5 | 9 : - : 1 | 2,7 |
| 4c | 14,8 | 1,5 | - | 15,7 | 9 : 1 : - | 4,5 |

Beispiel 5

A Teile Chinacridonchinon und B Teile Chinacridon werden in 180 Teilen 98 %iger Schwefelsäuregelöst. Anschließend werden bei maximal 10 °C C Teile 2-Phenoxyacridon bzw. D Teile 1,2,3,4,-Tetrahydro-8-phenoxyacridon zugegeben und 5 - 10 Minuten bei 10 °C gerührt. Die Hydrolyse der schwefelsauren Lösung erfolgt durch Eingießen in 1100 Teile Wasser auf 0 °C, die Aufarbeitung, wie in Beispiel 1 beschrieben. Man erhält Z Teile goldfarbenen Pigments.

| Beispiel | A | B | C | D | Z | Molverhältnis A : B : C : D | ΔE 1000 h |
|---|---|---|---|---|---|---|---|
| 5a | 13,7 | - | 1,45 | - | 14,6 | 8 : - : 1 : - | 3,2 |
| 5b | 13,7 | 1,56 | 1,45 | - | 15,9 | 8 : 1 : 1 : - | 1,9 |
| 5c | 13,7 | 1,56 | 0,65 | - | 15,3 | 8 : 1 : 0,45 - | 2,0 |
| 5d | 13,7 | - | - | 1,45 | 14,8 | 8 : - : - : 1 | 2,8 |
| 5e | 13,7 | 1,56 | - | 1,45 | 16,2 | 8 : 1 : - : 1 | 1,5 |

Beispiel 6

13,7 Teile Chinacridonchinon, 2,0 Teile 2,9-Dicarbonamidochinacridon und 0,72 Teile 2-Anilinoacridon werden bei 15 °C in 160 Teilen 98 %iger Schwefelsäure gelöst und die erhaltene Lösung anschließend durch Eingießen in 1000 Teile Wassser von 0 °C hydrolysiert. Nach Aufarbeitung, wie in Beispiel 1 beschrieben, erhält man 15,7 Teile eines goldfarbenen Pigments mit guter Licht- und Wetterechtheit,

dessen Röntgenbeugungsdiagramm nur die Reflexe des Chinacridonchinons aufweist.

Beispiel 7

13,7 Teile Chinacridonchinon, 1,56 Teile Chinacridon und 1,43 Teile 2-Anilinoacridon werden bei 130 - 140° C in 350 Teilen Polyphosphorsäure (84 % $P_4O_{10}$) gelöst und 1 - 2 Stunden bei dieser Temperatur verrührt. Nach Hydrolyse durch Eingießen in 2500 Teile Eiswasser und Aufarbeitung, wie in Beispiel 1 beschrieben, erhält man 15,9 Teile eines goldfarbenen Pigments, dessen Röngtenbeugungsdiagramm nur die Reflexe des Chinacridonchinons aufweist.

Beispiel 8

A Teile Chinacridonchinon, B Teile Chinacridon und C Teile 8-Methyl-2-(4-toluylamino)-acridon werden in 180 Teilen 98 %iger Schwefelsäure von 15° C gelöst. Anschließend wird die Lösung durch Eingießen in 1080 Teile Eiswasser hydrolysiert. Man erhält nach Aufarbeitung, wie in Beispiel 1 beschrieben, Z Teile eines goldfarbenen Pigments (vgl. hierzu die nachstende Tabelle), wobei das Produkt gemäß Beispiel 8b dem gemäß 8a hinsichtlich der Licht- und Wetterechtheit überlegen ist.

| Beispiel | A | B | C | Z | Molverhältnis A : B : C |
|---|---|---|---|---|---|
| 8a | 15,4 | - | 1,57 | 16,2 | 90 : - : 10 |
| 8b | 15,4 | 0,78 | 0,79 | 16,2 | 90 : 5 : 5 |

Beispiel 9

22,7 Teile 2,5-Bis-(2-carboxy-anilino)-1,4-benzochinon (Formel 1a, R = H) werden bei 130 - 140° C in 600 Teile Polyphosphorsäure (84 % $P_4O_{10}$) innerhalb von 45 Minuten eingetragen. Anschließen werden 2,6 Teile 2,5-Dianilinoterephthalsäure (Formel 2a, R = H) und 1,8 Teile 4-(2-carboxyanilino)-diphenylamin (Formel 3a, R = H, X = NH) zugegeben. Darauf wird der Ansatz 2 Stunden bei 140 - 150° C gerührt. Die Hydrolyse erfolgt durch Eingießen dieser Lösung in 4800 Teile Wasser von 50° C, die Aufarbeitung wie in Beispiel 1 beschrieben. Man erhält 22,5 Teile eines goldfarbenen Pigments, dessen Röntgenbeugungsdiagramm nur die Reflexe des Chinacridonchinons aufweist.

Beispiel 10

Die Durchführung erfolgt wie in Beispiel 9 beschrieben, nur werden anstelle von 1,8 Teilen 4-(2-carboxyanilino)-diphenylamin 1,8 Teile 4-(2-carboxyanilino)-diphenylether (Formel 3a, R = H, X = O) zugesetzt. Man erhält 21,6 Teile eines goldfarbenen Pigments.

Beispiel 11

6,8 Teile Chinacridonchinon, 9,4 Teile Chinacridon und 1,44 Teile 1,2,3,4-Tetrahydro-8-anilinoacridon werden in 160 Teilen 98 %iger Schwefelsäure bei 20 - 15° C gelöst. Die erhaltene Lösung wird anschließend durch Eingießen in 1400 Teile Wasser von 0° C hydrolysiert und die erhaltene Suspension 2 Stunden auf 90° C erwärmt. Man erhält nach Absaugen, Neutralwaschen und Trocknen 17,0 Teile eines maroonfarbenen Pigments, das nach 1500 Stunden Bewitterung in dem oben beschriebenen TSA-Lacksystem (1:1-$TiO_2$-Aufhellung) einen $\Delta$E-Wert von 1,0 besitzt.

Beispiel 12

5,1 Teile Chinacridonchinon, 9,4 Teile Chinacridon und 1,44 Teile 2-Anilinoacridon werden wie in Beispiel 11 beschrieben behandelt. Man erhält 15,3 Teile eines maroonfarbenen Pigments, das nach 2000 Stunden Bewitterung in dem oben beschriebenen TSA-Lacksystem (1:1-$TiO_2$-Aufhellung) einen $\Delta$E-Wert von 1,5 besitzt.

Beispiel 13

A Teile Chinacridonchinon, B Teile Chinacridon und C Teile 2-Phenoxyacridon werden bei 10 - 15 °C in X Teilen 98 %iger Schwefelsäure gelöst. Die erhaltene Lösung wird anschließen durch Eingießen in Y Teile Wasser von 0 °C hydrolysiert. Man erhält nach Aufarbeitung gemäß Beispiel 11 Z Teile eines maroonfarbenen Pigments (vgl. die nachstehende Tabelle).

| Beispiel | A | B | C | X | Y | Z | ΔE | |
|---|---|---|---|---|---|---|---|---|
| | | | | | | | 1000 h | 2000 h |
| 13a | 5,1 | 9,4 | 1,44 | 140 | 1400 | 15,4 | 1,4 | 2,0 |
| 13b | 7,7 | 7,02 | 1,45 | 180 | 900 | 15,6 | 0,4 | 0,9 |
| 13c | 7,7 | 7,02 | 0,65 | 180 | 900 | 14,6 | 0,9 | 1,1 |

Beispiel 14

17,0 Teile 2,5-Bis-(2-carboxy-anilino)-1,4-benzochinon (Formel 1a, R = H) werden bei 130 - 140 °C in 560 Teile Polyphosphorsäure (84 % $P_4O_{10}$) innerhalb von 45 Minuten eingetragen. Anschließen werden 15,7 Teile 2,5-Dianilinoterephthalsäure (Formel 2a, R = H) und 3,1 Teile 4-(2-carboxy-anilino)-diphenylamin (Formel 3a, R = H, X = NH) zugegeben und der Ansatz 2 Stunden bei 140 - 150 °C gerührt. Die Hydrolyse erfolgt durch Eingießen dieser Lösung in 3400 Teile Wasser von 50 °C und die weitere Aufarbeitung wie in Beispiel 11 beschrieben. Man erhält 29,7 Teile eines maroonfarbenen Pigments.

Die nach die Beispielen 11 - 14 erhaltenen Pigmente zeigen im Röntgenbeugungsdiagramm neben dem verschobenen Kristallgitter des Chinacridonchinons auch noch kleine Reflexe des Chinacridons.

## Patentansprüche

1. Pigmente der Chinacridonchinon-Reihe, bestehend aus 98 - 20 Molprozent eines Chinacridonchinons der allgemeinen Formel (1)

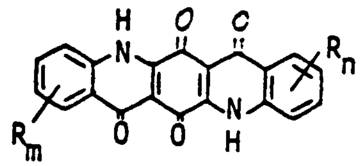

(1)

in welcher R ein Wasserstoff- oder Chloratom oder eine Methyl- oder Carbonamidgruppe bedeutet, und m, n = 1 oder 2 ist, und 1 - 65 Molprozent eines Chinacridons der allgemeinen Formel (2)

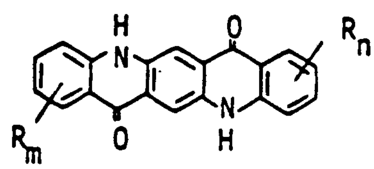

(2)

in welcher R, m und n die vorstehend genannte Bedeutung haben, und 1 - 15 Molprozent eines oder zweier Acridonderivate der allgemeinen Formeln (3) und/oder (4)

(3) 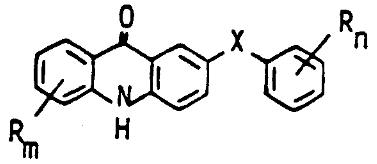 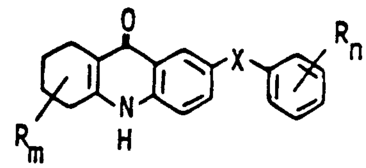 (4)

in welcher X = O oder NH bedeutet und R gleich oder verschieden sein kann und, wie m und n, die vorstehend genannte Bedeutung hat, wobei die zugesetzten Verbindungen der allgemeinen Formeln (2), (3) und/oder (4) überwiegend in das Kristallgitter des Chinacridonchinons der allgemeinen Formel (1) eingebaut sind.

**2.** Pigmente der Chinacridonchinon-Reihe, bestehend aus 98 - 70 Molprozent des Chinacridonchinons der Formel

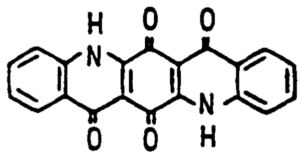

1 - 15 Molprozent Chinacridon der Formel

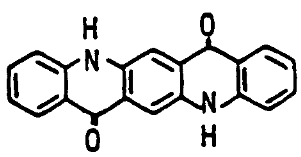

und 1 - 15 Molprozent eines oder zweier Acridonderivate der Formeln

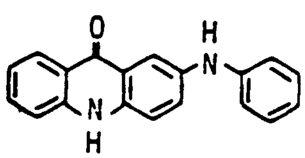 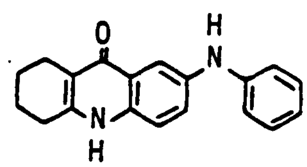

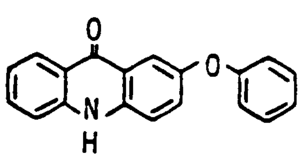 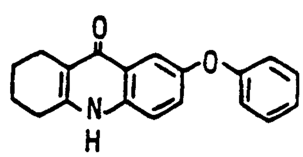

wobei die zugesetzten Verbindungen im Kristallgitter des Chinacridonchinons vorliegen.

**3.** Pigmente der Chinacridonchinon-Reihe, bestehend aus 54 - 20 Molprozent Chinacridonchinon der Formel

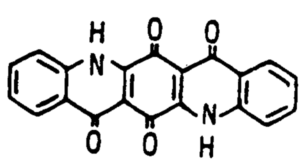

45 - 65 Molprozent Chinacridon der Formel

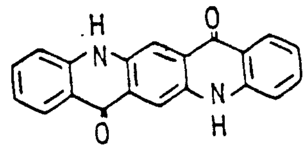

und 1 - 15 Molprozent eines oder zweier Acridonderivate der Formeln

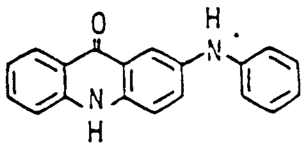

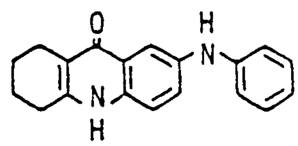

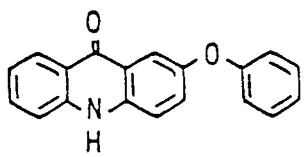

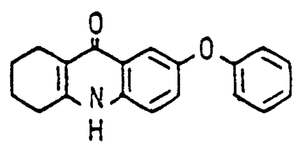

wobei die zugesetzten Verbindungen überwiegend im Kristallgitter des Chinacridonchinons vorliegen.

**4.** Verfahren zur Herstellung der Mischkristallpigmente von Anspruch 1, dadurch gekennzeichnet, daß man die Verbindungen der dort genannten allgemeinen Formeln (1), (2), (3) und/oder (4) in der 5- bis 40-fachen Gewichtsmenge einer Säure, der gegenüber die genannten, zu lösenden Verbindungen bei den jeweils angewandten Temperaturen inert sind, löst und anschließend durch Eingießen der Lösung in die 5- bis 20-fache Gewichtsmenge Wasser von 0 - 50 ° C, bezogen auf das Gewicht der eingesetzten Säure (100 %ig), hydrolysiert.

**5.** Verfahren nach Anspruch 4, dadurch gekennzeichnet, daß man die Verbindungen der allgemeinen Formeln (1), (2), (3) und/oder (4) in der 5- bis 20-fachen Gewichtsmenge 96 - 100 %iger Schwefelsäure bei 0 - 30 ° C löst.

**6.** Verfahren nach Anspruch 4, dadurch gekennzeichnet, daß man die Verbindungen der allgemeinen Formel (1 ), (2), (3) und/oder (4) in der 5- bis 40-fachen Gewichtsmenge Polyphosphorsäure (80 - 86 % $P_4O_{10}$) bei 120 - 160 ° C löst.

**7.** Verfahren zur Herstellung der Mischkristallpigmente von Anspruch 1, dadurch gekennzeichnet, daß man 98 - 20 Molprozent einer Verbindung der allgemeinen Formel (1a) 1 - 65 Molprozent einer Verbindung der allgemeinen Formel (2a) und 1 - 15 Molprozent einer Verbindung der allgemeinen Formel (3a)

(1a) 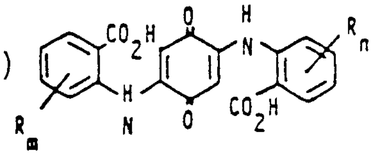

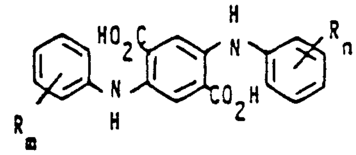 (2a)

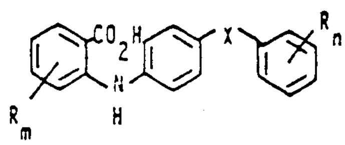 (3a)

in welchen R, m, n und X die in Anspruch 1 genannten Bedeutungen haben, in der 8- bis 40-fachen Gewichtsmenge Polyphosphorsäure (80 - 86 % $P_4O_{10}$) bei Temperaturen von 100 - 180 ° C gemeinsam cyclisiert und anschließend durch Eingießen der Lösung in die 5- bis 20-fache Gewichtsmenge Wasser von 0 - 50 ° C, bezogen auf das Gewicht der eingesetzten Polyphosphorsäure, hydrolysiert.

**8.** Verwendung der Mischkristallpigmente von Ansprüchen 1 - 3 zum Anfärben synthetischer und natürlicher Materialien, insbesondere zur Herstellung von Automobil-Metallic-Lackierungen.

## Claims

**1.** A pigment of the quinacridonequinone series consisting of 98-20 mol per cent of a quinacridonequinone of the formula (1)

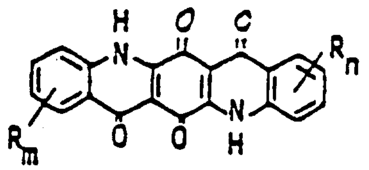 (1)

in which R denotes a hydrogen or chlorine atom or a methyl or carboxamide group and m and n are 1 or 2, and 1-65 mol per cent of a quinacridone of the formula (2)

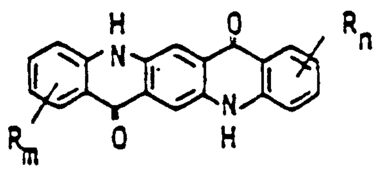 (2)

in which R, m and n have the abovementioned meaning, and 1-15 mol per cent of one or two acridone derivatives of the formulae (3) and/or (4)

(3) 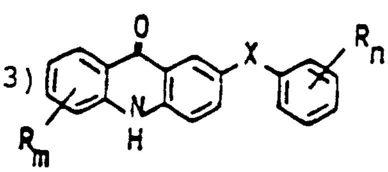 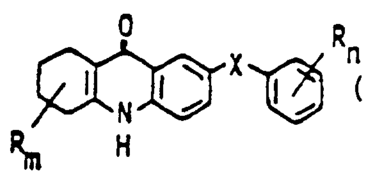 (4)

in which X denotes O or NH and the symbols R can be identical or different and, like m and n, have the abovementioned meaning, the added compounds of the formulae (2), (3) and/or (4) being predominantly incorporated into the crystal lattice of the quinacridonequinone of the formula (1).

**2.** A pigment of the quinacridonequinone series consisting of 98-70 mol per cent of the quinacridonequinone of the formula

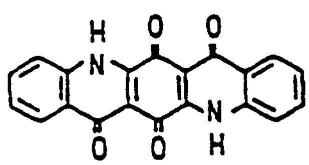

1-15 mol per cent of the quinacridone of the formula

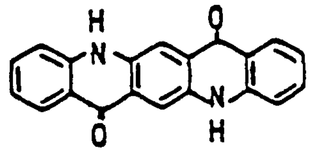

and 1-15 mol per cent of one or two acridone derivatives of the formulae

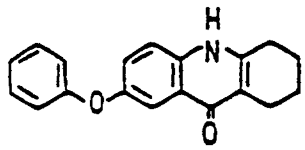
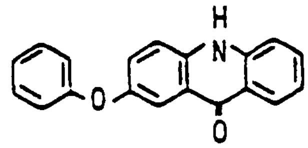
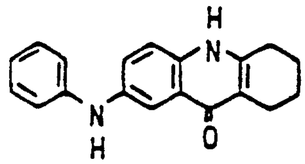
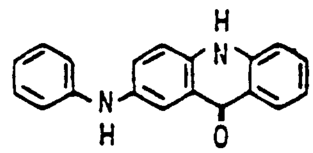

the added compounds being present in the crystal lattice of the quinacridonequinone.

**3.** A pigment of the quinacridonequinone series consisting of 54-20 mol per cent of quinacridonequinone of the formula

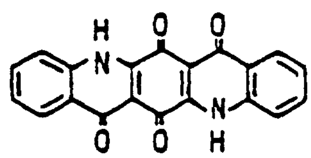

45-65 mol per cent of the quinacridone of the formula

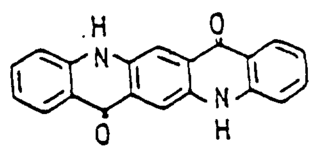

and 1-15 mol per cent of one or two acridone derivatives of the formulae

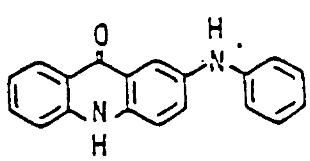
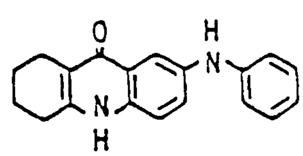
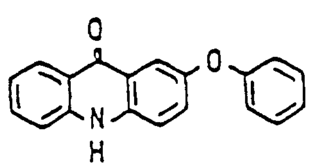
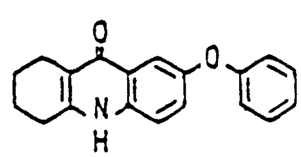

the added compounds predominantly being in the crystal lattice of the quinacridonequinone.

4. A process for the preparation of a mixed crystal pigment as claimed in claim 1, which comprises dissolving the compounds of the formulae (1), (2), (3) and/or (4) mentioned there in 5 to 40 times the amount by weight of an acid which, at the particular temperatures used, is inert towards the above-mentioned compounds to be dissolved, and then hydrolyzing the compounds by pouring the solution into 5 to 20 times the amount by weight of water at 0-50 ° C, based on the weight of acid employed (100% strength).

5. The process as claimed in claim 4, wherein the compounds of the formulae (1), (2), (3) and/or (4) are dissolved in 5 to 20 times the amount by weight of 96-100% strength sulfuric acid at 0-30 ° C.

6. The process as claimed in claim 4, wherein the compounds of the formulae (1), (2), (3) and/or (4) are dissolved in 5 to 40 times the amount by weight of polyphosphoric acid (80-86% strength $P_4O_{10}$) at 120-160 ° c.

7. A process for the preparation of a mixed crystal pigment as claimed in claim 1, which comprises cyclizing 98-20 mol per cent of a compound of the formula (1a), 1-65 mol per cent of a compound of the formula (2a) and 1-15 mol per cent of a compound of the formula (3a)

(1a) 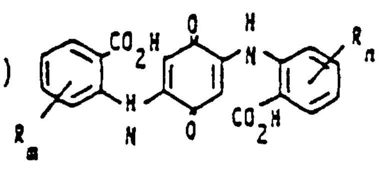

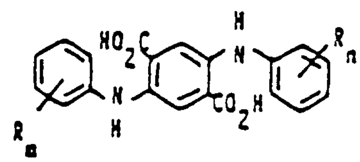 (2a)

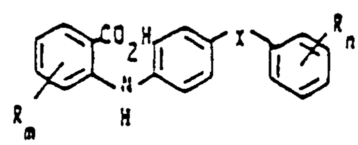 (3a)

in which R, m, n and X have the meanings given in claim 1, together in 8 to 40 times the amount by weight of polyphosphoric acid (80-86% strength $P_4O_{10}$) at temperatures of 100-180 ° C and then hydrolyzing the product by pouring the solution into 5 to 20 times the amount by weight of water at 0-50 ° C, based on the weight of the polyphosphoric acid employed.

8. The use of a mixed crystal pigment as claimed in any one of claims 1 - 3 for coloring synthetic and naturally occurring materials, in particular for the production of metallic car lacquerings.

**Revendications**

1. Pigments de la série des quinacridones-quinones qui sont formés de 98 à 20 mol % d'une quinacridone-quinone de formule générale (1) ci-dessous :

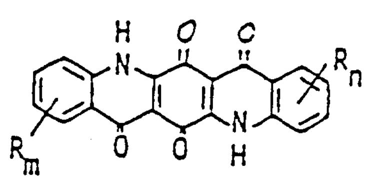 (1)

dans laquelle le symbole R représente un atome d'hydrogène ou de chlore ou un groupe méthyle ou carboxamide et m et n sont chacun le nombre 1 ou 2, de 1 à 65 mol % d'une quinacridone de formule générale (2) :

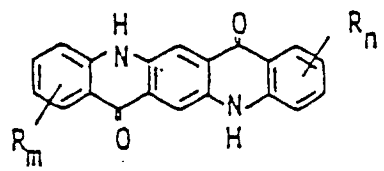

(2)

dans laquelle R, m et n ont les mêmes significations que pour la formule 1, et de 1 à 15 mol % d'un ou deux dérivés d'acridone de formules générale (3) et/ou (4) :

(3) 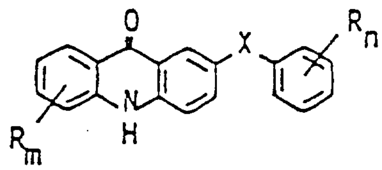 et/ou 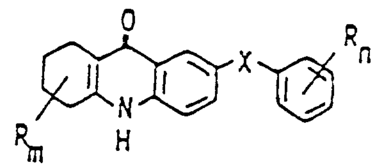 (4)

formules dans lesquelles X désigne l'oxygène ou le groupe NH et les R, qui peuvent être identiques ou différents l'un de l'autre, ont les significations précédentes, ainsi que m et n, ces composés ajoutés de formules (2), (3) et/ou (4) se trouvant principalement insérés dans le réseau cristallin de la quinacridone-quinone de formule (1).

**2.** Pigments de la série des quinacridones-quinones qui sont formés de 98 à 70 mol % de la quinacridone-quinone de formule :

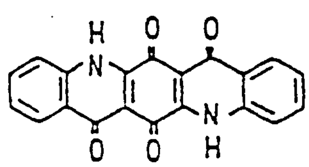

de 1 à 15 mol % de la quinacridone de formule

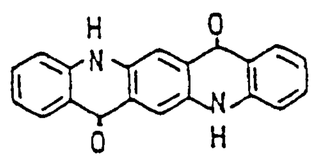

et de 1 à 15 mol % d'un ou de deux dérivés d'acridone de formules

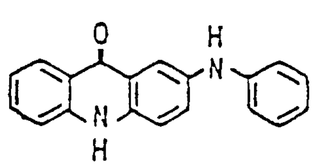

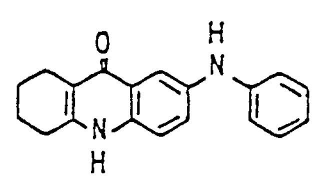

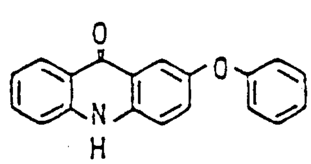

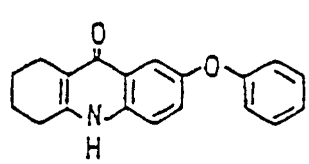

les composés ajoutés se trouvant dans le réseau cristallin de la quinacridone-quinone.

**3.** Pigments de la série des quinacridones-quinones qui sont formés de 54 à 20 mol % de la quinacridone-quinone de formule :

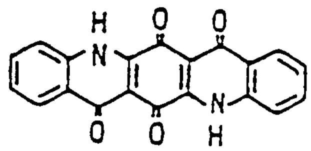

de 45 à 65 mol % de la quinacridone de formule

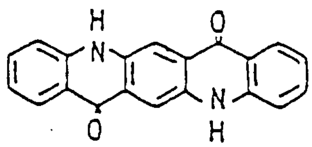

et de 1 à 15 mol % d'un ou de deux dérivés d'acridone de formules

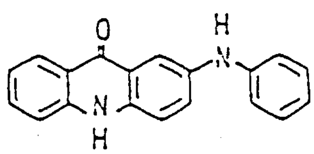

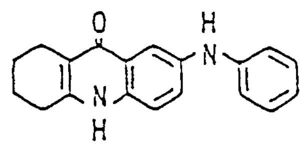

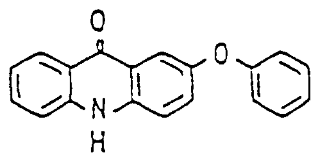

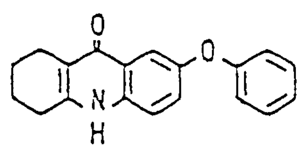

les composés ajoutés se trouvant principalement dans le réseau cristallin de la quinacridone-quinone.

**4.** Procédé de préparation des pigments de cristaux mixtes de la revendication 1, procédé caractérisé en ce que l'on dissout les composés de formules (1), (2), (3) et/ou (4) dans 5 à 40 fois leur poids d'un acide chimiquement inerte à leur égard aux températures appliquées, puis on les hydrolyse en versant la solution dans un poids d'eau à une température de 0 à 50 °C qui est de 5 à 20 fois le poids de l'acide à 100 % employé.

**5.** Procédé selon la revendication 4, caractérisé en ce que l'on dissout les composés de formules générales (1), (2), (3) et/ou (4) dans 5 à 20 fois leur poids d'acide sulfurique à 96-100 %, entre 0 et 30 °C.

**6.** Procédé selon la revendication 4, caractérisé en ce que l'on dissout les composés de formules générales (1), (2), (3) et/ou (4) dans 5 à 40 fois leur poids d'acide polyphosphorique à 80-86 % de $P_4O_{10}$, entre 120 et 160 °C.

**7.** Procédé de préparation des pigments de cristaux mixtes de la revendication 1, procédé caractérisé en ce que l'on cyclise ensemble de 98 à 20 mol % d'un composé de formule générale (la) ci-dessous, avec de 1 à 65 mol % d'un composé de formule générale (2a) et de 1 à 15 mol % d'un composé de formule générale (3a)

(1a) 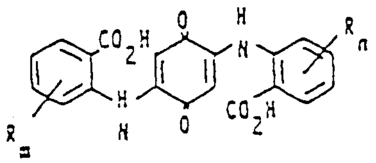

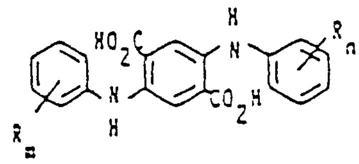 (2a)

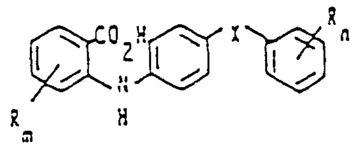 (3a)

formules dans lesquelles les divers symboles ont les significations données dans la revendication 1, dans 8 à 40 fois leur poids d'acide polyphosphorique à 80-86 % de $P_4O_{10}$, à des températures de 100 à 180 °C, puis on hydrolyse en versant la solution dans un poids d'eau à 0-50 °C, qui est de 5 à 20 fois le poids de l'acide polyphosphorique employé.

**8.** Emploi des pigments de cristaux mixtes des revendications 1 à 3 pour en teindre des matières synthétiques ou naturelles, en particulier pour fabriquer des peintures métallisées d'automobiles.